# EUROPÄISCHE PATENTSCHRIFT

(11) **EP 1 437 511 B1**
(45) Veröffentlichungstag und Bekanntmachung des Hinweises auf die Patenterteilung: **24.05.2006**
(21) Anmeldenummer: 03029503.4
(22) Anmeldetag: 20.12.2003
(51) Int. Cl.: F04C 15/00, F16J 15/34, F16C 33/76

(54) **Vorrichtung zur Wellenabdichtung einer Drehkolbenpumpe**
Device for shaft sealing of a rotary piston pump
Dispositif pour joint d'étanchéité d'une pompe à piston rotatif

(30) Priorität: 08.01.2003 DE 20300127 U
(43) Veröffentlichungstag der Anmeldung: 14.07.2004
(73) Patentinhaber: Hugo Vogelsang Maschinenbau GmbH, 49632 Essen (DE)
(72) Erfinder: Krampe, Paul, 49632 Essen (DE)
(74) Vertreter: Eisenführ, Speiser & Partner

(56) Entgegenhaltungen:
- EP-A- 1 231 419
- DE-U- 20 010 216

## Beschreibung

Die Erfindung bezieht sich auf eine Vorrichtung zur Wellenabdichtung einer Drehkolbenpumpe, aufweisend eine auf der Welle mitdrehend befestigte Hülse und an dieser drehfest und unverschieblich befestigten Teilen, nämlich einem Stellring, einem stationären, in einer Bohrung des Gehäuses positionierten Außenring mit innen liegenden Teilen, nämlich einem ortfesten Gummiring, einem ortfesten Gleitring und einer Wellendichtung.

Die Erfindung bezieht sich auch auf eine mehrteilige Gleitringdichtung zur axialen Abdichtung des Pumpenraums einer Drehkolbenpumpe zur Förderung von sauberem, aber auch von mit Fasern oder dergleichen beladenem Gut, aufweisend eine Hülse und einen Stellring, die auf der Pumpenwelle aufsitzen und mit dieser mitdrehen, und einen ortsfesten Außenring, in dessen Innenraum über eine ortsfeste Gummiringdichtung ein ortsfester Leitring federnd angeordnet ist, wobei zwischen dem Außenring und dem Stellring ein sich axial-radial erstreckender Spalt verbleibt.

Es ist eine Drehkolbenförderpumpe mit einer Vorrichtung der eingangs genannten Art bekannt (DE 200 10 216 U1).

Die bekannte Pumpe hat sich in ihrem Einsatz bestens bewährt, wenngleich deren Vorrichtung zur Wellenabdichtung aus einzelnen Teilen gebildet ist, die bei der Montage und Demontage der Pumpe jeder für sich zusammengesetzt und auseinandergebaut werden müssen.

Heutzutage werden jedoch Anforderungen gestellt, die mit derartigen bekannten Pumpen kritisch werden könnten. Enthält nämlich das zu fördernde Material Fasern oder andere Verschmutzungen, so könnten bei der Montage der Gleitringdichtung Partikel zwischen die Gleitflächen geraten und so Probleme verursachen, die die Einsatzdauer der Pumpe herabsetzen können.

Bei Pumpenwellen, die mit Fördergut in Berührung kommen, stellt sich das Problem, die Welle und ihre Lagerbereiche gegen Verschmutzungen durch das Fördergut abzudichten.

Je nach Einsatzzweck von derartigen Wellen, beispielsweise für Drehkolben einer Förderpumpe, können Schwierigkeiten insbesondere darin liegen, dass aus dem geförderten Gut Faserbestandteile in den Dichtungsbereich eintreten. Dadurch werden beispielsweise Dichtlippen auseinandergepresst, oder ein Ringspalt zwischen einem mit der Welle mitbewegten Innenteil und einem gehäusefesten äußeren Teil wird mit Faserbestandteilen nach und nach angefüllt und setzt sich schließlich mit einer Art Fasermatte zu. Dadurch wird einerseits der Wirkungsgrad der Pumpe verschlechtert, andererseits wird das Nachpressen von Kühlmittel in den Ringspalt verhindert, da dieser eben mit Fasermaterial angefüllt ist. Durch Reibung wird eine weitere thermische Belastung der Bauteile bewirkt, die vor allem die Lebensdauer derartiger Dichtungen verkürzt. Des Weiteren treten beim Austausch von Dichtungen vor Ort Probleme dadurch auf, dass aufgrund der beengten Einbausituation eine mehrteilige Gleitringdichtung in der Regel nur von speziell ausgebildetem Personal mit ausreichender Sorgfalt montiert werden kann. Insbesondere kann bei getrennter Montage beider Dichtungshälften Schmutz zwischen die Gleitflächen gelangen, die die Dichtungsfunktion von Anfang an beeinträchtigen würde.

Der Erfindung liegt das Problem zugrunde, dass in ungünstigen Einbausituationen Gleitringdichtungen vor Ort montiert werden können und dass die Belastung der Dichtungen bei Pumpen verringert werden kann, insbesondere wenn faserhaltige Materialien gefördert werden sollen.

Diese Aufgabe wird dadurch gelöst, dass die innere Stirnseite des Stellrings als axiale Gleitfläche ausgebildet ist und mit dem Gleitring eine Gleitringdichtung bildet, an der Wellendichtung ein Distanzring angeordnet ist, der Außendurchmesser des Distanzringes größer als der kleinste Innendurchmesser des Außenrings ist, der Gummiring auf dem Gleitring aufsitzt, der Stellring auf der Hülse aufsitzt und dass die Wellendichtung im Inneren des Außenrings angeordnet und mit einem auf der Hülse befindlichen Laufring ausgebildet ist, wobei der Stellring dem Drehkolben axial benachtbart ist und der Bereich kleinsten Innendurchmessers des Außenrings dem Distanzring einen Anschlag nach axialer durch den sich entspannenden Gummiring bewirkter Bewegung des Distanzrings bildet.

Eine abgewandelte Ausführungsform der Erfindung ist **dadurch gekennzeichnet, dass** ein Aufnahmering einen Hohlraum aufweist, in dem ein zweiter O-Ring mit einem zweiten spiegelsymmetrisch zum ersten Gegenring ausgebildeten Gegenring angeordnet ist, wobei der Gegenring mit dem Aufnahmering eine weitere Gleitringdichtung bilden.

Das Wesentliche der vorliegenden Erfindung ist darin zu sehen, dass die Hülse und der Außenring sowie alle dazwischen angeordneten Teile als Baueinheit (Cartridge) zusammengefasst werden und als solche demontiert und zusammengebaut werden können. Dies ist für die praktische Handhabung von besonderem Vorteil, weil nach dem Ausbau der Welle mit dem Drehkolben lediglich eine weitere Baueinheit, nämlich der Blockring bzw. die Cartridgeeinheit ausgewechselt werden muss.

Die Erfindung wird nachstehend anhand der Zeichnungen beispielsweise erläutert, wobei am Ende der Figurenbeschreibung weitere Vorteile der Erfindung anschaulicher erläutert werden können.
- Figur 1: zeigt einen Längsquerschnitt in einer Halbansicht durch die Gleitringdichtung einer Drehkolbenförderpumpe in zusammengebautem Zustand.
- Figur2: zeigt eine zur Figur 1 entsprechende Darstellung, nachdem der Drehkolben entfernt worden ist.
- Figur 3: zeigt eine Stimansicht der in
- Figur 4: gezeigten Gleitringdichtung mit seinen Einzelteilen.
- Figur 5: zeigt eine weitere Bauart des in der Figur 1 dargestellten Längsquerschnitts.

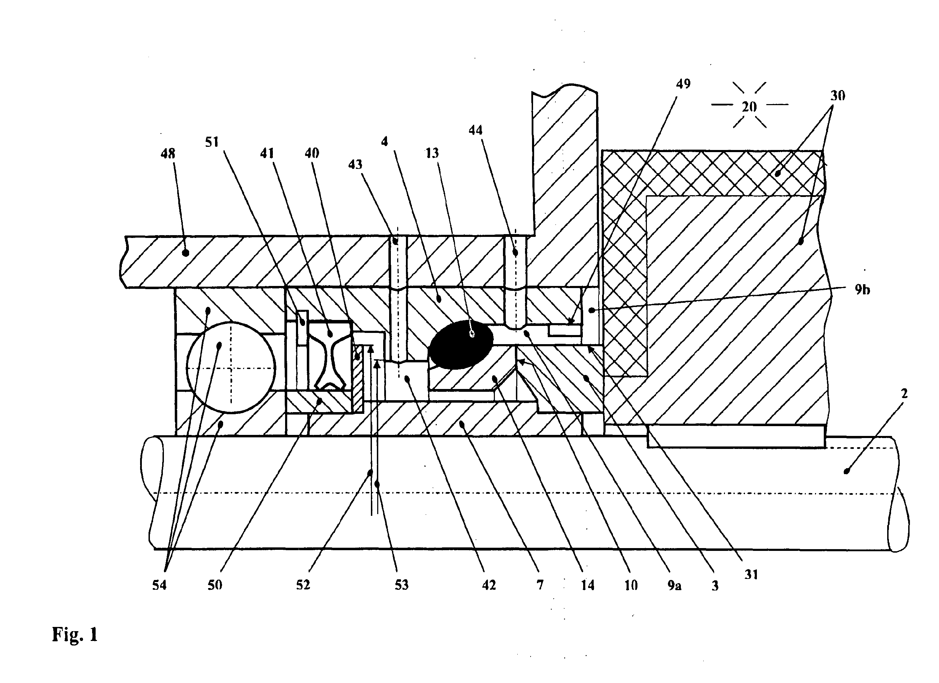

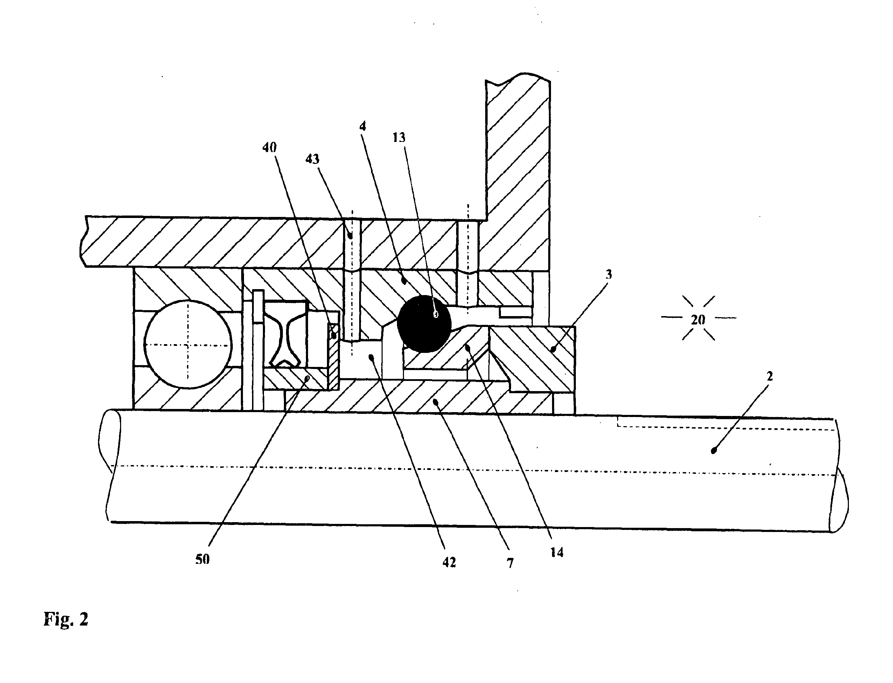

In den Figuren 1 und 2 ist eine Pumpenwelle 2 gezeigt, wobei sich in einem nur zum Teil gezeigten Pumpenraum 20 ein Drehkolben 30 befindet, der nur schematisch und teilweise in Figur 1 gezeigt ist. Es ist ersichtlich, dass durch Drehung der Welle 2 der Drehkolben 30 im Pumpenraum gedreht werden kann und entsprechend Fördergut transportiert.

Im Pumpengehäuse 48 ist im Inneren ein Außenring 4 vorgesehen, der dort ohne weiteres eingebaut und auch ausgebaut werden kann.

Der Außenring 4 ist mit einem abdichtenden Gummiring 13, einem O-Ring, ausgestaltet, wobei der Gummiring 13 auf einem Gleitring 14 aufsitzt. Demzufolge sind der Gummiring 13 und der Gleitring 14 ortsfeste Teile. In Figur 1 ist der an sich runde Querschnitt des Gummirings 13 verformt gezeigt, die Figur 2 zeigt die entlastete Form mit Kreisquerschnitt.

Auf der Welle 2 sitzt eine Hülse 7 auf. Die Hülse 7 ist am pumpenseitigen Ende (bei 20) mit einem Stellring 3 versehen, wobei der Stellring 3 über die Hülse 7 mit der Welle 2 eine Drehverbindung eingeht.

Am linksseitigen Ende der Hülse 7 ist eine Wellendichtung 41 vorgesehen, die dafür Sorge trägt, dass in ein weiter links auf der Welle 2 befindliches Lager 54 kein Material eindringen kann. Die Wellendichtung 41 ist mit einem Laufring 50 versehen. Ein Distanzring 40 legt m Betriebszustand einen Abstand zu dem ortsfesten Außenring 4 fest.

Im Gehäuse 48 bzw. im Außenring 4 sind zwei radial verlaufende Bohrungen 43 und 44 ausgebildet. Die Bohrung 43 führt in einen Innenraum 42 im Inneren des Außenrings 4 bzw. radial außerhalb der Hülse 7, so dass dieser Raum mit einer Kühl- und Schmierflüssigkeit befüllt werden könnte. Die Bohrung 44 führt in einen Spalt 9a bzw. 9b und kann beispielsweise zum Abschmieren verwendet werden. Dadurch kann beispielsweise das Verhärten von in den Spalt 9b eingedrungenen Faserstoffe verhindert werden.

Der axiale Spalt 9a befindet sich radial außerhalb des Stellrings 3 bzw. des Gleitrings 14 und innerhalb des Außenrings 4. An seinem pumpenseitigen Ende läuft der Spalt 9a in einen sich radial erstreckenden ringförmigen Spalt 9b aus, der mit dem Pumpenraum 20 in Verbindung steht. Es ist ersichtlich, dass Fördermedium durchaus aus dem Pumpenraum 20 in den Spalt 9b und dann auch in den axialen Spalt 9a eindringen kann. Um zu verhindern, dass dieses Fördermedium zur Welle 2 bzw. zum Lager 54 der Welle gelangt, befindet sich zwischen dem Stellring 3 und dem Gleitring 14 eine so genannte Gleitringdichtung. Dies bedeutet, dass diese beiden Teile sich relativ zueinander bewegen können, aber zwischen ihren Gleitflächen 10 praktisch kein Pumpmedium hindurch gelangen kann.

Unter normalen Betriebsbedingungen kann das Fördermedium zwar in die Spalte 9b und 9a eindringen, wobei die Bohrung 44 nach außen hin abgeschlossen ist, es kann jedoch nur in geringem Maße zwischen die Gleitflächen 10 gelangen. Die die Spalte 9b und 9a durchströmende Flüssigkeit dient zum Abführen der an den Gleitflächen 10 entstehenden und an den Stellring 3 sowie an den Gleitring 14 abgegebenen Wärmeenergie.

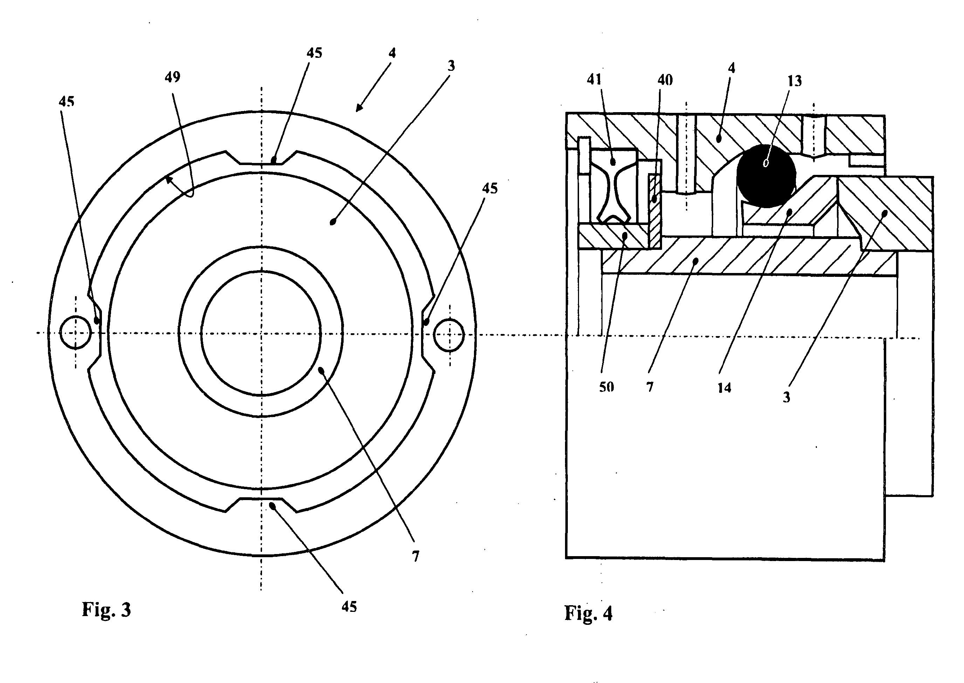

Bei einem Fördermedium, das beispielsweise Fasern oder Verschmutzungen enthält, gelangen diese Fasern in die Spalte 9b und 9a und bilden dort, je nach Betriebszeit, eine so genannte Matte, wobei diese Matte sich nicht mit der Welle 2 mitdreht, sondern zusammen mit dem Außenring 4 ortsfest ist. Bei einer besonderen Ausführungsform der Erfindung wird dieser Effekt noch dadurch gefördert, dass die Außenoberfläche 31 des Stellrings 3 glatt ausgebildet ist, während die entsprechende Oberfläche 49, nämlich die Innenoberfläche des Außenrings 4, mit reibungserhöhenden Mitteln versehen ist, beispielsweise mit Vorsprüngen 45, wie sie in Figur 3 zu erkennen sind.

Diese ortsfeste Matte könnte sich bis an den Gummiring 13 heran erstrecken. Dies ist jedoch deshalb unproblematisch, weil sowohl die Matte als auch der Gummiring 13 ortsfest sind. Bei bekannten Ausführungsformen von Drehkolbenpumpen konnte dies deshalb problematisch werden, weil die ortsfeste Matte sich bis zu dem sich drehenden Gummiring erstrecken und die Dichtung mechanisch beeinträchtigen konnte. Auch konnte dadurch eine erhebliche Wärmeenergie erzeugt werden, die außerdem nur schlecht abgeführt werden konnte. Bei der bevorzugten Ausführungsform der Erfindung mit der glatten Oberfläche 31 des Stellrings 3 und den reibungserhöhenden Mitteln 45 des Außenrings 4 ist weder eine mechanische Beeinträchtigung noch eine thermische Beeinträchtigung zu befürchten.

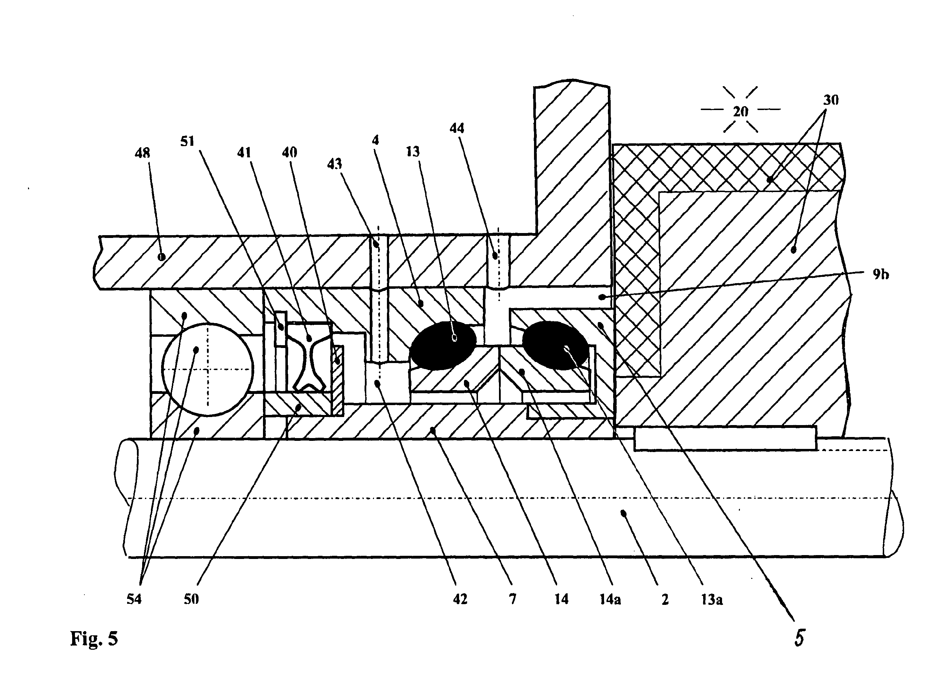

Solange faserstofffreie Flüssigkeiten gepumpt werden, kann eine handelsübliche Gleitringdichtung gemäß Fig. 5 in der Cartridge-Einheit eingebaut werden. Hierbei ist ein Aufnahmering 5 mit einem Hohlraum versehen, in dem ein zusätzlicher Gegenring 14a und ein weiterer O-Ring 13a spiegelsymmetrisch zur Gleitfläche zu den Teilen 14 und 13 eingebaut sind. Der Vorteil der Cartridge-Bauweise liegt auch bei dieser Version darin, dass bei Vor-Ort-Montage alle zur Wellenabdichtung erforderlichen Bauteile in der vorher zusammengebauten Position montiert sind und als Einheit eingebaut werden können, ohne dass während der Montage Schmutzteilchen zwischen die Gleitflächen 10 geraten könnten.

Ausgehend von der Figur 1 wird nachfolgend der Vorgang der Demontage des Blockrings gemäß der Erfindung beschrieben.

Der Drehkolben 30 wird aus dem Pumpengehäuse entfernt und nunmehr nehmen die Teile des Blockrings die in Figur 2 gezeigte Lage und Form ein. Der Stellring 3 wird nämlich nicht mehr gegen den Drehkolben 30 gedrückt, da dieser entfernt worden ist. Der Gummiring 13 geht in seine Normalgestalt zurück und bewegt dadurch den Gleitring 14 und auch den Stellring 3 bei Betrachtung der Figuren 1 und 2 nach rechts. Dieser axiale Bewegungsvorgang wird auf die Hülse 7 übertragen und daher auch auf den Distanzring 40 der Dichtung 41. Dadurch gelangt der Distanzring 40 an einen Anschlag im Inneren des Laufrings 4, und dieser begrenzt daher die axiale Bewegung der Teile 7, 3 und 14. Wesentlich ist, und das lässt die Figur 2 am besten erkennen, dass der Distanzring 40 in seinem Außendurchmesser größer ist, als der kleinste Innendurchmesser des Außenrings 4 und dass daher der Distanzring 40 an dem Ringvorsprung des Außenrings 4 anliegt. Auch bei der Demontage verbleiben die Hülse 7 und der Außenring 4 als eine Einheit zusammen, und der Raum 42 bleibt aufgrund der Wellendichtung nach außen hin abgeschlossen. So kann der Raum 42 mit seinen benachbarten Teilen nicht verschmutzen.

Der nächste Arbeitsschritt ist nunmehr, dass die Dichtung von der Welle 2 entfernt wird, so dass sie die in Figur 4 gezeigte Gestalt annimmt. Die in Figur 4 gezeigte, aus den Teilen 41, 50, 40, 4, 13, 14, 3 und 7 gebildete Dichtung kann nun als Einheit dem Gehäuse entnommen und durch eine entsprechende Dichtung ersetzt werden. Danach können die Welle 2 und der Drehkolben 30 wieder eingesetzt werden.

Es ist ein besonderer Vorteil der vorliegenden Erfindung darin zu sehen, dass diese Dichtung (Figur 4) als Baueinheit lagerfähig und für sich transportabel ist, wobei nach Verschließen der Bohrung 43 aufgrund der Dichtfunktion der Wellendichtung 41 mit dem Laufring 50 immer sichergestellt bleibt, dass im Inneren etwa vorhandene Schutzflüssigkeit nicht auslaufen kann.

## Patentansprüche

1. Vorrichtung zur Wellenabdichtung einer Drehkolbenpumpe mit Drehkolben, aufweisend eine auf der Welle (2) mitdrehend befestigte Hülse (7) und an dieser drehfest und unverschieblich befestigten Teilen, nämlich einem Stellring (3) , einem Distanzring und einem Laufring, sowie einem stationären, in einer Bohrung des Gehäuses (48) positionierten Außenring (4) mit innen liegenden Teilen, nämlich einem ortfesten Gummiring (13), einem ortfesten Gleitring (14) und einer Wellendichtung (41), **dadurch gekenzeichnet, dass** die innere Stimseite (10) des Stellrings (3) als axiale Gleitfläche ausgebildet ist und mit dem Gleitring (14) eine Gleitringdichtung bildet; an der Wellendichtung (41) eine Distanzring (40) angeordnet ist; der Außendurchmesser (52) des Distanzringes (40) größer als der kleinste Innendurchmesser (53) des Außenrings (4) ist; der Gummiring (13) auf dem Gleitring (14) aufsitzt; der Stellring (3) auf der Hülse (7) aufsitzt und dass die Wellendichtung (41) im Inneren des Außenrings (4) angeordnet ist und mit einem auf der Hülse (7) befindlichen Laufring (50) ausgebildet ist, wobei der Stellring (3) dem Drehkolben (30) axial benachbart ist und der Bereich kleinsten Innendurchmessers (53) des Außenrings (4) dem Distanzring (40) einen Anschlag nach axialer durch den sich entspannenden Gummiring (13) bewirkter Bewegung des Distanzrings (40) darbietet.

2. Vorrichtung gemäß Anspruch 1, **dadurch gekennzeichnet, dass** ein Stellring (5, Fig. 5) einen Hohlraum aufweist, in dem ein zweiter O-Ring (13a) mit einem zweiten spiegelsymmetrisch zum ersten Gleitring (14) ausgebildeten Gleitring (14a) angeordnet ist, wobei der Gleitring (14a) mit dem Stellring eine weitere Gleitringdichtung bildet.

## Claims

1. Device for shaft sealing of a rotary piston pump with a rotary piston, comprising a sleeve (7) turning with and fixed on the shaft (2) and parts mounted on said sleeve not rotatable and not displaceable, that is an adjusting ring (3), a spacer ring and a race, as well as a stationary outer ring (4) positioned in a bore of the housing (48) and comprising parts located on the inside thereof, that is a stationary rubber ring (13), a stationary slip ring (14) and a shaft seal (41), **characterised in that** the inner face (10) of the adjusting ring (3) is formed as an axial slip surface and forms a slip ring seal with the slip ring (14); a spacer ring (40) is arranged on the shaft seal (41); the outer diameter (52) of the spacer ring (40) is larger than the smallest inner diameter (53) of the outer ring (4); the rubber ring (13) seats on the slip ring (14); the adjusting ring (3) seats on the sleeve (7); and that the shaft seal (41) is arranged on the inside of the outer ring (4) and is formed with a race (50) located on the sleeve (7), wherein the adjusting ring (3) is axially adjacent to the rotary piston (30) and the area of the smallest inner diameter (53) of the outer ring (4) presents of stop for the spacer ring (40) after axial movement of the spacer ring (40) caused by releasing the tension of the rubber ring (13).

2. Device according to claim 1, **characterised in that** an adjusting ring (5, Fig. 5) comprises a cavity, in which a second 0-ring (13a) is arranged with a slip ring (14a) formed in mirror symmetry to the first slip ring (14), said slip ring (14a) forming a further slip ring seal with the adjusting ring.

## Revendications

1. Dispositif d'étanchéification de l'axe d'une pompe à piston rotatif, qui comporte une douille (7) fixée sur l'axe (2) et tournant ensemble avec ce dernier, et, des éléments assemblés avec ladite douille de manière fixe et sans possibilité de rotation, à savoir une bague de butée (3), une bague d'espacement, un anneau de roulement ainsi qu'une bague extérieure (4) stationnaire disposée dans l'alésage d'un boîtier (48) et pourvue d'éléments intérieurs, à savoir d'un anneau en caoutchouc fixe (13), d'une bague de friction fixe (14) et d'une étanchéité de l'axe (41) **caractérisé en ce que**
- la face frontale intérieure (10) de la bague de butée (3) constitue une surface de glissement axiale et forme avec la bague de friction (14) une étanchéité de cette dernière,
- une bague d'espacement (40) est disposée près de l'étanchéité de l'axe (41),
- le diamètre extérieur (52) de la bague d'espacement (40) est plus grand que le plus petit diamètre intérieur (53) de la bague extérieure (4),
- l'anneau en caoutchouc (13) est monté sur la bague de friction (14),
- l'étanchéité de l'axe (41) est disposée à l'intérieur de la bague extérieure (4) et comporte un anneau de roulement (50) disposé sur la douille (7),
- la bague de butée (3) est disposée axialement à proximité du piston rotatif (30),
- la zone de la bague extérieure (4) ayant le plus petit diamètre intérieur (53) sert de butée à la bague d'espacement (40) après un mouvement axial de cette dernière provoqué par le mouvement de détente de l'anneau de caoutchouc (13).

2. Dispositif selon la revendication 1 **caractérisé par** une bague de butée (5) avec un creux dans lequel est disposé un second anneau torique d'étanchéité (13a) avec une bague de friction (14a) disposée symétriquement par rapport à la bague de friction (14) et formant avec la bague de butée une seconde étanchéité.
